# FASCICULE DE BREVET EUROPEEN

(11) **EP 2 597 946 B1**
(45) Date de publication et mention de la délivrance du brevet: **18.12.2019**
(21) Numéro de dépôt: 11738009.7
(22) Date de dépôt: 23.06.2011
(51) Int. Cl.: A01M 7/00

(54) **DISPOSITIF DE PULVERISATION A INJECTION DIRECTE POUR ENGIN NOTAMMENT AGRICOLE, ET ENGIN EQUIPE D'UN TEL DISPOSITIF**
DIREKTINJEKTIONSSPRÜHGERÄT FÜR EIN FAHRZEUG, IM BESONDEREN EIN LANDWIRTSCHAFTLICHES FAHRZEUG UND FAHRZEUG MIT EINER DERARTIGEN VORRICHTUNG
DIRECT-INJECTION SPRAYING DEVICE FOR A VEHICLE, IN PARTICULAR AN AGRICULTURAL VEHICLE, AND VEHICLE PROVIDED WITH SUCH A DEVICE

(30) Priorité: 29.07.2010 FR 1056262
(43) Date de publication de la demande: 05.06.2013
(73) Titulaire: EXEL INDUSTRIES, 51200 Epernay (FR)
(72) Inventeur: BALLU, Patrick Jean Marie, F-51100 Reims (FR)
(74) Mandataire: Ahner, Philippe
(86) Numéro de dépôt international: PCT/FR2011/051449
(87) Numéro de publication internationale: WO 2012/013879

(56) Documents cités:
- EP-A1- 0 385 926
- EP-A1- 1 378 293
- WO-A1-01/87493
- FR-A1- 2 920 101
- GB-A- 670 101
- US-A- 4 121 767

## Description

La présente invention se rapporte à un dispositif de pulvérisation à injection directe pour engin notamment agricole, et à un engin équipé d'un tel dispositif, voir par exemple US 4,121,767 A.

Les dispositifs de pulvérisation à injection directe pour engin notamment agricole, du type comprennent :
- une cuve principale,
- au moins une rampe de pulvérisation,
- un circuit reliant ladite cuve à ladite rampe, ce circuit comprenant une pompe principale et une dérivation de régulation du débit dans ladite rampe en fonction de la vitesse d'avancement dudit engin, et
- au moins un réservoir de matière active, relié audit circuit par un une pompe doseuse.

Un tel dispositif à injection directe permet d'injecter les matières actives en aval de la cuve principale, et ainsi de supprimer les contraintes de rinçage de cette cuve avec des volumes d'eau claire importants, en fin de pulvérisation.

Outre que cela permet d'effectuer d'importantes économies d'eau de rinçage, cela permet de changer rapidement de matière active.

Un tel changement peut être effectué soit en changeant manuellement de réservoir de matière active, soit en prévoyant plusieurs réservoirs de matières actives installés sur l'engin et reliés au circuit de pulvérisation par un système de vannes.

On peut de la sorte effectuer des pulvérisations sur mesure, dites encore « à la parcelle ».

La pression reste généralement constante, et la quantité de matière active injectée par la pompe doseuse dans le circuit est régulée pour s'approcher d'une quantité surfacique de liquide pulvérisé sensiblement indépendante de la vitesse de l'engin (on parle souvent de régulation DPA : « Débit Proportionnel à l'Avancement »).

Un tel dispositif de pulvérisation présente toutefois certains graves inconvénients, qui ne lui ont pas permis de bien prospérer :
- lorsque l'engin agricole ralentit, le débit d'injection de matière active dans le liquide à pulvériser diminue, et le liquide plus faiblement dosé en matière active met un certain temps avant d'atteindre toutes les buses de la ou des rampes : pendant cette durée, les végétaux sont sur-dosés en matière active ;
- à l'inverse, lorsque l'engin agricole accélère, le débit d'injection de matière active dans le liquide à pulvériser augmente, et le liquide plus fortement dosé en matière active met un certain temps avant d'atteindre toutes les buses de la ou des rampes : pendant cette durée, les végétaux sont sous-dosés en matière active.
- en cas de ralentissement temporaire court, les deux phénomènes sont asynchrones et leurs effets négatifs se cumulent.

On a pu constater en outre que les phénomènes de sur ou sous-dosages étaient irréguliers et asynchrones, selon la distance de chaque buse par rapport au point d'incorporation de la matière active dans le liquide à pulvériser (notamment dans les rampes de grandes longueur).

La présente invention a notamment pour but de résorber ces inconvénients.

On atteint ce but de l'invention avec selon la revendication 1 un dispositif de pulvérisation à injection directe pour engin notamment agricole, du type comprenant :
- une cuve principale,
- au moins une rampe de pulvérisation,
- un circuit reliant ladite cuve à ladite rampe, ce circuit comprenant une pompe principale et une dérivation de régulation du débit dans ladite rampe en fonction de la vitesse d'avancement dudit engin,
- au moins un réservoir de matière active, relié audit circuit par une pompe doseuse,
ce dispositif étant remarquable en ce qu'il comprend un mélangeur à cyclone comprenant dans une première partie, de préférence supérieure, une pluralité d'orifices d'entrée sensiblement tangentiels, décalés de préférence d'un quart de tour les uns par rapport aux autres, et aptes à recevoir respectivement le liquide aspiré dans ladite cuve et le liquide sous pression provenant de ladite dérivation, et une pluralité d'orifices d'entrée des liquides sous pression provenant desdits réservoirs de matières actives, lesdits orifices d'entrée étant sensiblement perpendiculaires à un axe du mélangeur à cyclone, et sensiblement en saillie intérieure, afin de pénétrer au coeur du flux entrant par l'orifice d'entrée recevant le liquide aspiré dans la cuve,et dans une deuxième partie, de préférence inférieure, un orifice de sortie apte à permettre l'aspiration du mélange de ces liquides par ladite pompe principale.

Grâce à ce mélangeur à cyclone, disposé juste en amont de la pompe principale, et recevant d'une part le liquide de la cuve principale, et d'autre part celui de la dérivation de régulation de débit (aussi appelée « by-pass »), on peut réaliser de manière très rapide le mélange parfaitement homogène de la (ou des) matière(s) active(s) avec le liquide à pulvériser (en général de l'eau ou de la bouillie).

De plus, un tel mélangeur est par définition d'une conception extrêmement simple, et peu encombrant, de sorte qu'il peut être très facilement incorporé à une installation de pulvérisation classique.

Du fait de sa petite taille, il est en particulier possible de disposer le mélangeur à cyclone, la pompe, la vanne de régulation DPA et la dérivation de régulation de débit (« by-pass ») très près les uns des autres : on réduit de la sorte la longueur des conduites et des volumes morts de l'ensemble du circuit.

Par ailleurs, la quantité de matière active injectée par chaque pompe doseuse étant proportionnelle à la quantité de liquide venant de la cuve principale C (mesurée notamment par un débitmètre), c'est-à-dire à la quantité pulvérisée effectivement par les seules buses ouvertes, tout semble se passer comme si on avait aspiré le liquide pré-dosé directement depuis ladite cuve C, comme c'est le cas dans un pulvérisateur DPA classique.

De plus, par rapport aux précédents dispositifs d'injection directe, ledit nouveau dispositif ne souffre d'aucun des inconvénients de sur ou sous-dosage générés, comme expliqué ci-dessus, par l'inertie des longueurs de conduites, pendant les changements de vitesse de l'engin.

Suivant d'autres caractéristiques optionnelles du dispositif selon l'invention :
- ledit dispositif comprend en outre un retour de circulation de ladite rampe vers ledit mélangeur, et ledit mélangeur comporte en outre un orifice d'entrée apte à recevoir le liquide sous pression provenant de ce retour : un tel retour (qui porte le nom habituel de circulation continue ou semi-continue) permet d'éviter les risques de sédimentation ou de colmatage des buses des rampes de pulvérisation, et contribue à la parfaite homogénéisation des matières actives à l'intérieur du mélangeur ;
- ledit dispositif est apte à fonctionner selon au moins deux gammes de vitesses :
   - une gamme relativement lente, dans laquelle on réduit le débit de matière active provenant dudit réservoir de matière active par rapport au débit de liquide provenant de ladite cuve principale, et
   - une gamme relativement rapide, dans laquelle on augmente le débit de matière active provenant dudit réservoir de matière active par rapport au débit de liquide provenant de ladite cuve principale ;
- ledit dispositif comprend une pluralité de réservoirs de matières actives reliés audit circuit par des pompes doseuses respectives : on peut de la sorte pulvériser ces matières actives en combinaison ou bien successivement, selon les besoins des parcelles parcourues par l'engin, sans être contraint de vider préalablement la cuve principale de sa bouillie ;
- la cuve est associée à un débitmètre mesurant la quantité de liquide aspirée dans ladite cuve principale et apte à permettre le pilotage des pompes doseuses en conséquence.
- le dispositif comprend au moins un moyen de temporisation de la pulvérisation, activé notamment lors d'un changement de dosage des pompes doseuses de manière à assurer une propagation du nouveau dosage à tout le circuit avant pulvérisation.
- ledit dispositif comprend un bidon de rinçage connecté audit circuit par une vanne principale de rinçage disposée entre ladite cuve principale et ledit mélangeur : ce bidon permet de rincer ce circuit après une campagne de pulvérisation ;
- ledit bidon de rinçage est en outre relié à des vannes secondaires de rinçage disposées entre lesdits réservoirs de matières actives et lesdites pompes doseuses : ce bidon de rinçage permet ainsi de rincer les conduites reliant les réservoirs au mélangeur, par exemple lorsqu'on souhaite changer de réservoirs de matières actives ;
- ledit dispositif comprend en outre un système d'incorporation, connecté d'une part à une vanne générale disposée entre ladite pompe principale et ladite dérivation, et d'autre part à ladite cuve principale : un tel dispositif d'incorporation, connu en soi, permet notamment d'incorporer des produits pulvérulents au liquide (en général de l'eau) qui se trouve à l'intérieur de la cuve principale ;
- ledit dispositif comprend en outre un système de rinçage de ladite cuve principale, connecté à ladite vanne générale ;
- l'orifice de sortie est orienté de manière sensiblement tangentielle, notamment dans un sens de sortie du cyclone.
- l'orifice de sortie est orienté selon une direction sensiblement coaxiale sensiblement parallèle à un axe longitudinal (A) du mélangeur.
- ce mélangeur présente une forme choisie dans le groupe comprenant les cylindres, les cônes et les sphères : ces formes sont particulièrement simples à réaliser ;
- ce mélangeur comprend au moins une lèvre intérieure disposée entre ses première et deuxième parties (supérieure et inférieure) : une telle lèvre contribue à éviter que le mélange ne passe directement des orifices d'entrée à l'orifice de sortie, ce qui risquerait de produire une homogénéisation insuffisante ;
- ce mélangeur comprend des chicanes ou des volets intérieurs aptes à favoriser l'homogénéisation rapide des différents liquides entrants.

La présente invention se rapporte également à un engin agricole selon la revendication 15, remarquable en ce qu'il est équipé d'un dispositif de pulvérisation conforme à ce qui précède.

D'autres caractéristiques et avantages de la présente invention apparaîtront à la lumière de la description qui va suivre, et à l'examen des figures ci-annexées, dans lesquelles :
- la figure 1 est une vue d'ensemble schématique d'un dispositif de pulvérisation à injection directe selon l'invention, à l'état d'arrêt ; une légende indique la nature des différents éléments de ce dispositif ;
- la figure 2 est une vue en perspective cavalière du mélangeur à cyclone (M) de la figure 1, à une échelle supérieure et à sortie tangentielle;

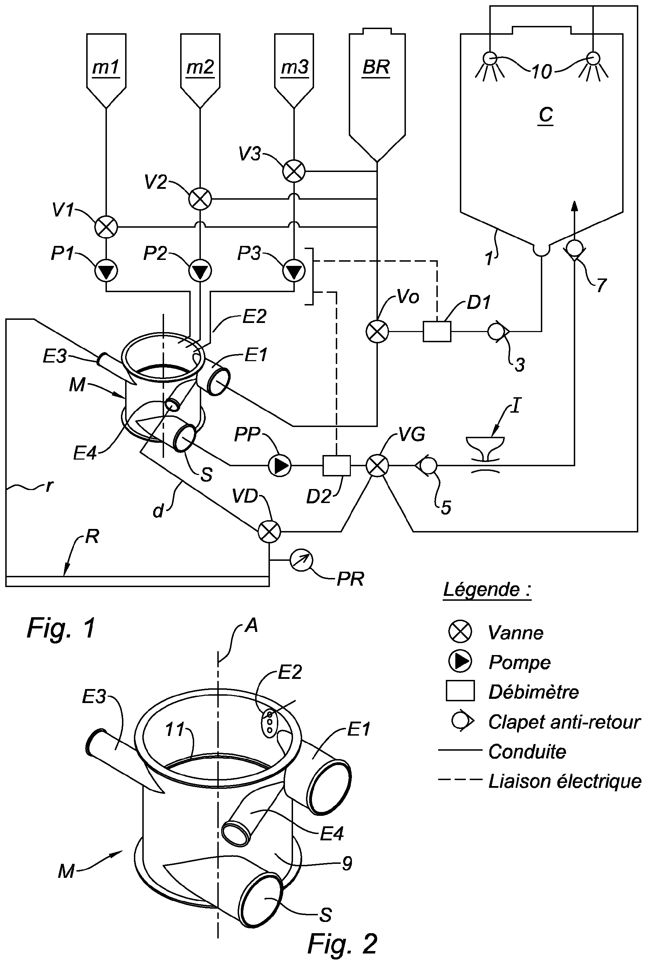

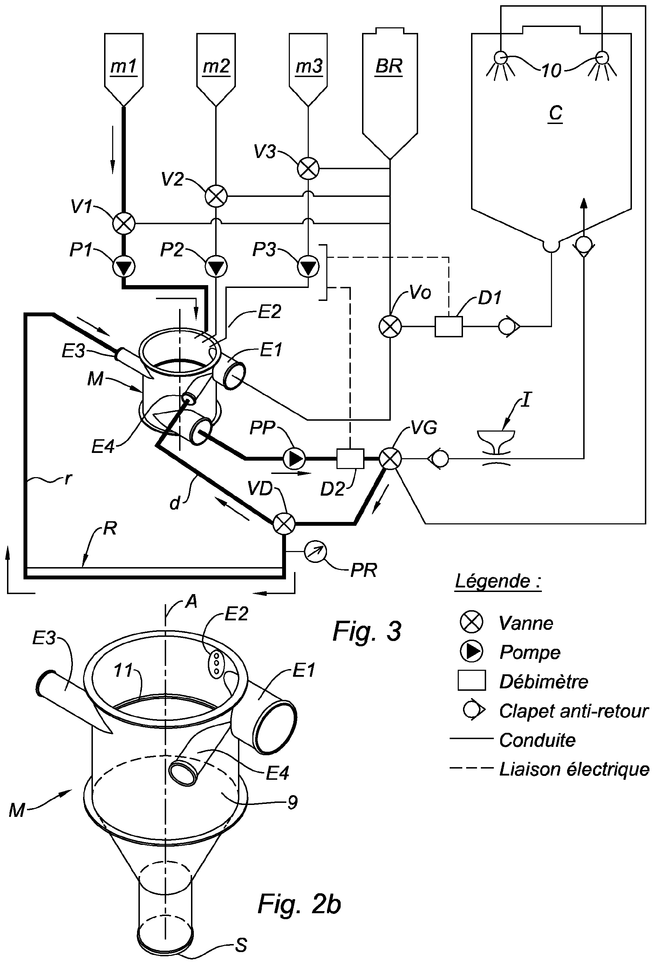

- la figure 2bis est une vue en perspective cavalière du mélangeur à cyclone (M) de la figure 1, mais à sortie coaxiale ;

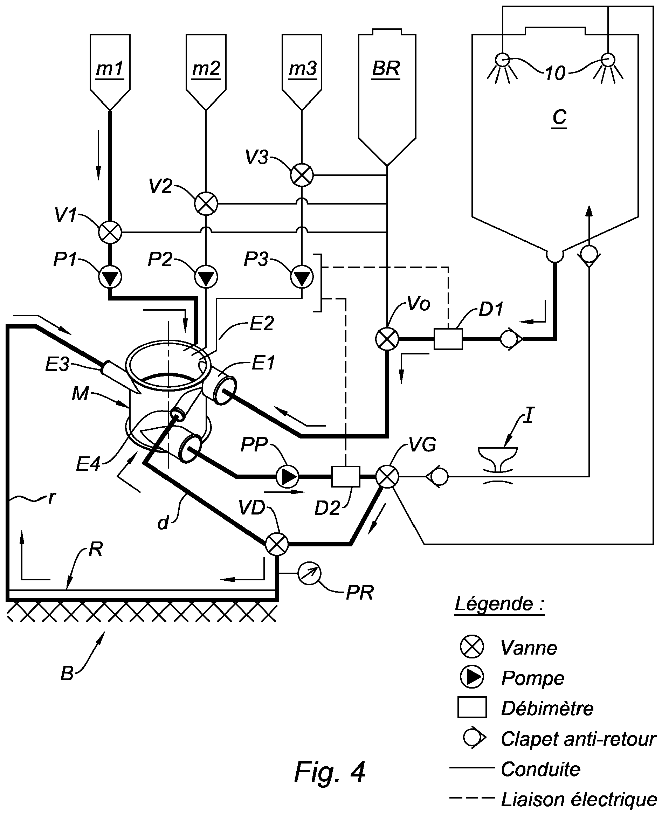

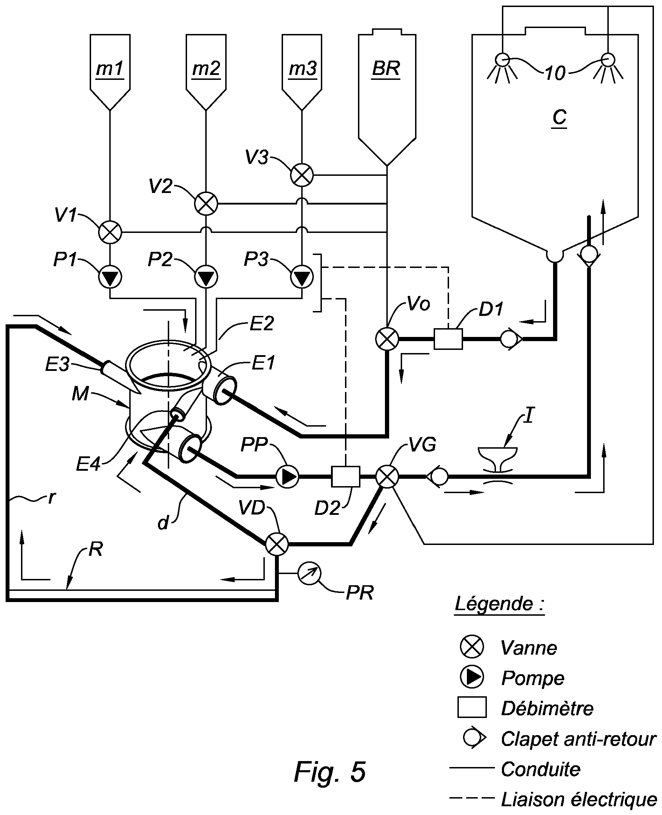

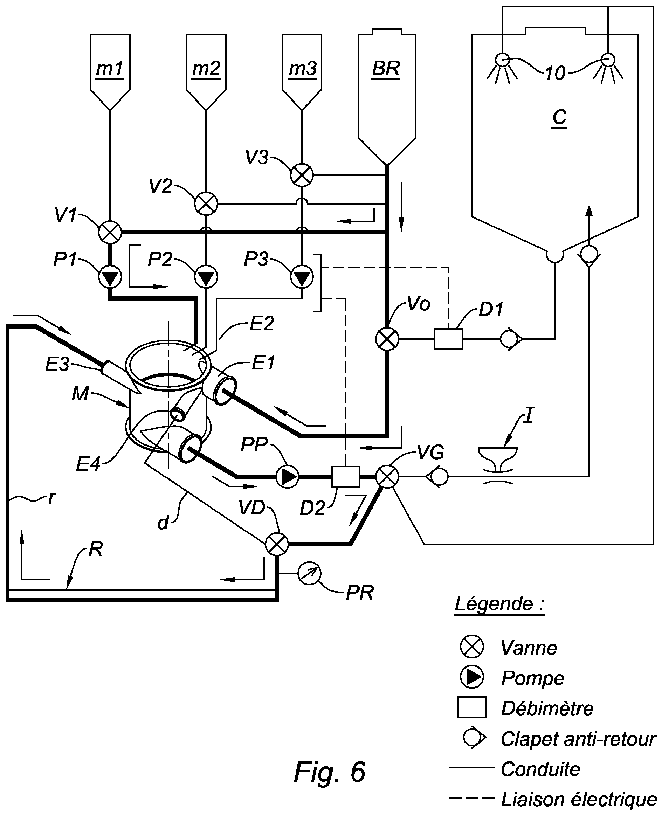

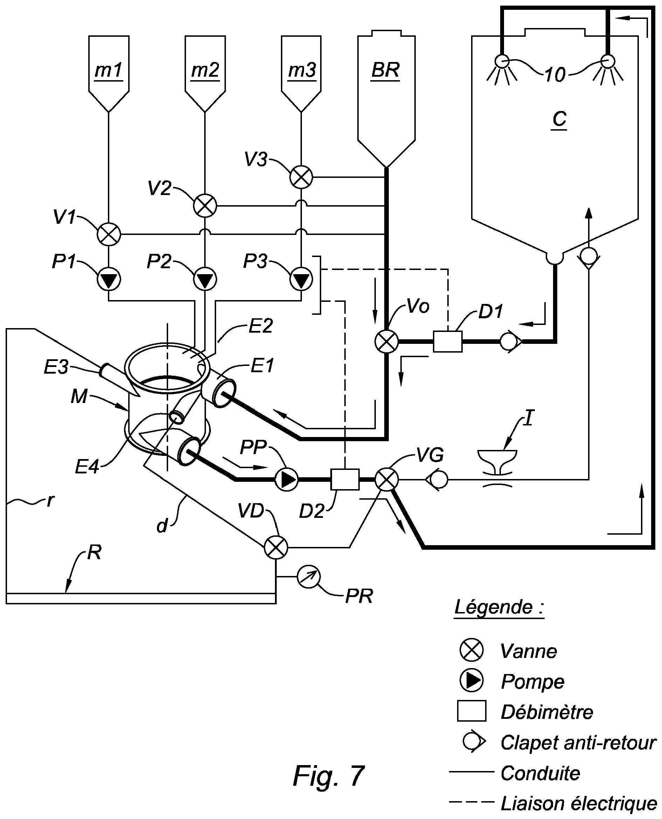

- les figures 3 à 7 représentent le dispositif de la figure 1 dans différents états de fonctionnement, à savoir : en phase initiale de dosage de matière active (figure 3), en phase de pulvérisation (figure 4), en phase d'incorporation (figure 5), en phase de rinçage de conduite d'introduction de matière active et de rampe de pulvérisation (figure 6), et en phase de rinçage de la cuve principale (figure 7).

Sur l'ensemble des figures 3 à 7, les parties actives du circuit, c'est-à-dire les conduites dans lesquelles circulent effectivement des liquides sous pression, sont représentées en traits épais, accompagnés de flèches.

Sur l'ensemble de ces figures, les références identiques ou analogues désignent des organes ou ensembles d'organes identiques ou analogues.

Le dispositif de pulvérisation qui va être décrit à présent est destiné à être installé sur un engin agricole de pulvérisation de produits phytosanitaires sur des champs de végétaux.

En se reportant à présent à la figure 1, on peut voir que ce dispositif comprend une cuve principale C, destinée à recevoir de l'eau claire ou un autre mélange, tel qu'un engrais liquide ou une bouillie pré-dosée de traitement des végétaux, permettant d'utiliser le pulvérisateur de manière traditionnelle, c'est-à-dire sans incorporation directe (cas des engrais liquides).

Le fond 1 de cette cuve C communique avec un clapet anti-retour 3, un débitmètre D1, et une vanne principale de rinçage V0.

Cette vanne principale de rinçage V0 communique à son tour d'une part avec un bidon de rinçage R, et d'autre part avec une première entrée supérieure E1 d'un dispositif de mélange à cyclone M qui sera décrit plus loin.

Plusieurs réservoirs de matières actives, trois dans l'exemple représenté (m1, m2, m3), communiquent avec trois vannes doseuses respectives V1, V2, V3, communiquant elles-mêmes d'une part avec le bidon BR, et d'autre part respectivement avec trois pompes doseuses P1, P2, P3.

Ces trois pompes doseuses P1, P2, P3 communiquent à leur tour avec trois orifices d'entrée groupés E2 dans le mélangeur M, décalés légèrement en aval (par exemple sensiblement d'un quart de tour) de l'orifice d'entrée E1, en pouvant faire saillie à l'intérieur du mélangeur M, afin de pénétrer directement dans le cœur du flux d'entrée E1.

Le mélangeur à cyclone M comporte par ailleurs dans sa deuxième partie (inférieure en l'espèce) un orifice de sortie S d'axe soit sensiblement tangent au sens sortant de rotation (ici trigonométrique) du cyclone, soit perpendiculaire à l'axe A du mélangeur M (voir détail figure 2), soit coaxial ou parallèle à cet axe, afin d'optimiser l'homogénéisation (variante représentée figure 2b), et qui communique avec une pompe principale PP, elle-même connectée à un débitmètre D2 et à une vanne générale VG.

La vanne générale VG est elle-même connectée à une vanne de régulation de débit VD, elle-même connectée à au moins une rampe de pulvérisation R munie d'au moins une conduite de retour vers un orifice d'entrée E3 disposé dans la première partie (en l'espèce supérieure) du mélangeur M, et décalé d'un quart de tour par rapport aux orifices d'entrée E2.

La vanne de régulation VD est d'autre part connectée à une conduite de dérivation d, dite « by-pass » elle-même connectée à un orifice d'entrée (supérieur) E4, décalé d'environ un quart de tour supplémentaire par rapport à l'orifice d'entrée (supérieur) E3.

Un dispositif de mesure de pression PR permet de connaître la pression du liquide qui se trouve dans la rampe de pulvérisation R.

La vanne générale VG est par ailleurs connectée à un dispositif d'incorporation I, lui-même connecté à la cuve C, des clapets anti-retour 5, 7 étant disposés en amont et en aval de ce dispositif d'incorporation I, comme représenté sur la figure 1.

Les vannes V0 et VG peuvent évidemment être remplacées par plusieurs vannes spécialisées.

La vanne générale VG est par ailleurs connectée à un dispositif de rinçage 9 (du type jet rotatif par exemple) de la cuve C.

En se reportant plus spécifiquement à la figure 2, on peut voir que le mélangeur M à cyclone peut être réalisé de manière très simple au moyen d'un cylindre 9 comportant dans sa première partie (supérieure) les orifices d'entrée E1, E2, E3, E4 et dans sa deuxième partie (inférieure) l'orifice de sortie S, les termes « supérieure » et « inférieure » s'entendant bien entendu par rapport à la verticale une fois que le mélangeur M est installé à bord de l'engin agricole, sachant que ces deux termes et positions peuvent être inversés.

Comme cela a déjà été indiqué précédemment, les orifices d'entrée (supérieurs) sont de préférence décalés d'un quart de tour les uns par rapport aux autres ; tandis que les orifices d'entrée E1, E3, E4 et l'orifice de sortie S sont disposés de manière sensiblement tangentielle, dans le sens du flux intérieur (ici trigonométrique) par rapport au cylindre 9 formant le corps du mélangeur M. En revanche, les orifices d'entrée E2 de matières actives m1, m2, m3 sont selon l'invention orientés selon une direction sensiblement perpendiculaire à l'axe A du mélangeur M, et sensiblement à saillie intérieure, afin de pénétrer au cœur du flux entrant par E1 ; enfin, on prévoit une lèvre 11, dont la fonction va être explicitée dans ce qui suit.

Le mélangeur M peut être réalisé en métal ou bien en matière plastique, et ses dimensions peuvent être typiquement de l'ordre d'une vingtaine de centimètres de hauteur et de diamètre.

Ce mélangeur n'a pas besoin d'avoir une grande résistance car il ne subit aucune pression significative, si ce n'est celle de la colonne de liquide formée par la cuve C.

Sur l'ensemble des figures annexées, ce mélangeur M a été représenté avec une partie supérieure ouverte, à des fins explicatives ; il faut bien entendu comprendre qu'en état de fonctionnement, cette partie supérieure, tout comme la partie inférieure de ce mélangeur, sont fermées.

On va à présent décrire le mode de fonctionnement et les avantages du dispositif de pulvérisation susmentionné, dans différentes phases de fonctionnement.

L'ensemble des réglages qui vont être indiqués peuvent être réalisés de manière manuelle, même s'il va de soi qu'il est nettement préféré de les piloter de manière automatique, avec un système de supervision électronique centralisée.

Une variante de mélangeur (M) représentée à la figure 2b montre un mélangeur équipée d'une sortie coaxiale à un axe A du mélangeur.

On a représenté à la figure 3 le dispositif selon l'invention dans une phase d'incorporation d'une matière active m1, dans l'ensemble du circuit de circulation (dont le volume mort est connu par construction), préalablement à une phase de pulvérisation.

Dans cette phase, on place la vanne V1 de manière que le réservoir de matière active m1 communique avec la pompe doseuse P1.

On fait fonctionner cette pompe P1 de manière à envoyer la matière active m1 à l'intérieur du mélangeur M, par l'un des orifices d'entrée E2.

On place la vanne principale V0 de manière à empêcher l'arrivée de liquide en provenance de la cuve C ou du bidon BR, à l'intérieur du mélangeur M.

On place la vanne générale VG de manière à orienter le liquide provenant du mélangeur M, via la pompe PP, vers la vanne de régulation VD.

On place la vanne de régulation VD en position intermédiaire entre la conduite de dérivation d et la rampe R ; on ferme les buses de pulvérisation.

On actionne la pompe principale PP ce qui a pour effet de mélanger la matière active m1 arrivant par l'entrée E2 avec d'autres liquides arrivant d'une part de la conduite de dérivation d, et d'autre part de la conduite de retour r.

Du fait de l'orientation tangente des orifices d'entrée E3 et E4, la matière active arrivant par l'orifice d'entrée E2 est entraînée en rotation par le flux des ces deux entrées E3 et E4, à la manière d'un cyclone à l'intérieur du cylindre 9, et descend progressivement en direction de l'orifice de sortie S.

La présence d'au moins une lèvre intérieure 11 évite que le mélange ainsi formé ne ressorte trop vite du cylindre 9 : on peut de la sorte obtenir une homogénéisation optimale et rapide de tout ce circuit de circulation.

La durée de cette phase d'incorporation et de dosage de la matière m1 peut être déterminée à partir de la connaissance du volume du circuit indiqué en trait fort sur la figure 3 : une fois que cette durée est atteinte, on ferme la vanne secondaire V1 et on stoppe la pompe doseuse P1, tout en continuant à faire tourner la pompe PP, afin de parfaire l'homogénéisation de tout le liquide circulant dans ce circuit.

De manière alternative, on peut utiliser le débitmètre D2 pour mesurer le volume de liquide ayant circulé pendant cette phase préalable, et le comparer au volume (connu par construction) de la portion de circuit indiquée en trait fort, afin de provoquer automatiquement la fermeture de la vanne V1 et de sa pompe P1 dès que le bon dosage dudit circuit est atteint. De même que ci-dessus, pour assurer une parfaite homogénéisation de tout le liquide circulant dans ce circuit, on laisse tourner la pompe PP quelque temps.

Le mélangeur à cyclone M permet de réaliser de manière très rapide l'incorporation de la matière active m1 au circuit de pulvérisation, étant noté que ce qui vient d'être décrit est bien entendu applicable aux autres réservoirs de matières actives m2, m3, ...., toutes ces matières actives pouvant être incorporées chacune à leur tour, ou bien de manière combinée partielle ou totale, en fonction de la nature des besoins des parcelles de végétaux à traiter.

On se reporte à présent à la figure 4, correspondant à une phase de pulvérisation durant laquelle on souhaite traiter une parcelle de végétaux avec de la matière active m1.

La configuration du dispositif de pulvérisation diffère de la précédente en ceci que la vanne principale V0 est à présent réglée de manière à permettre la circulation du liquide (en général de l'eau claire ou de la bouillie) qui se trouve à l'intérieur de la cuve principale C vers l'orifice d'entrée E1 du mélangeur M.

La pompe doseuse P1 est pilotée électroniquement à partir des informations fournies par le débitmètre D1, de manière que l'on obtienne le dosage correct de matière active m1 dans la rampe de pulvérisation R, dont les buses B sont en position ouverte, comme cela est visible sur la figure 4.

A noter que le complément de matière active, injecté par la pompe doseuse P1, est directement proportionnel (dosage prévu) à la quantité de liquide, venant de la cuve C et rentrant dans le mélangeur M par l'entrée E1, et donc également à la quantité de liquide pulvérisé par les buses de la rampe, quel que soit le nombre de buses ouvertes. Le dosage reste donc continuellement le même que prévu.

Comme cela est connu en soi, il convient que la pression du liquide situé à l'intérieur de la rampe R demeure sensiblement proportionnelle au carré de la vitesse d'avancement de l'engin agricole, de manière à assurer un volume par mètre carré sensiblement constant de liquide pulvérisé par les buses ouvertes sur les végétaux, c'est-à-dire un DPA (Débit Proportionnel à l'Avancement), sachant que le dosage en matière active, du liquide pulvérisé, reste toujours constant, grâce au présent dispositif.

Pour obtenir une telle pression, mesurée par le manomètre PR, on agit électriquement sur la vanne de régulation VD de manière à dévier le débit nécessaire vers la conduite de dérivation d qui retourne au mélangeur M par l'orifice d'entrée (supérieur) E4.

Lorsque l'engin agricole circule à des vitesses élevées, qui peuvent atteindre jusqu'à 25 km/h, voire davantage, on ne peut plus se contenter d'agir sur la pression à l'intérieur de la rampe R pour assurer le dosage correct des produits phytosanitaires pulvérisés, car elle pourrait devenir trop élevée car, pour passer de 5 à 25 km/h, il faut multiplier la pression par 25.

C'est pourquoi ledit dispositif est prévu, par exemple, avec 3 gammes de variation de vitesse : basse, moyenne et haute, tout comme des véhicules 4x4 ayant 2 ou 3 gammes de vitesses selon la position de la boite de transfert.

Appelons ces trois gammes, par exemple : tortue (4 à 10 km/h), normale (8 à 20 km/h), lièvre (12 à 30 km/h), permettant, dans chacune d'elle, de limiter la variation de pression à (2.5)²=6.25 fois seulement. La gamme de vitesse retenue devra de préférence être choisie avant de commencer à pulvériser dans une certaine tranche de vitesse.

Le choix de l'une de ces configurations, agira automatiquement sur le rapport entre le débit de la pompe doseuse P1, et le débit D2 venant de la cuve C, de manière à obtenir le bon dosage (concentration) voulu.

Dans le cas lièvre, le dosage de m1 par rapport à D2 sera augmenté de 50% par rapport au dosage normal, car la tranche des vitesses est 50% supérieure à la normale.

A l'inverse dans le cas tortue, il sera diminué de 50%, car les tranches de vitesse sont alors de moitié de la normale.

Notons qu'il serait préférable, avant de changer de gamme de vitesse, de refaire (de préférence en automatique) un nouveau cycle (rapide) de dosage du circuit de circulation, comme expliqué ci-dessus.

A noter que la conduite de retour r vers l'orifice d'entrée (supérieur) E3 du mélangeur M permet de limiter les risques de sédimentation et de colmatage des buses B de la rampe R, comme cela est connu en soi.

La configuration du dispositif de pulvérisation de la figure 5 correspond à une phase différente d'incorporation de produits, par exemple pulvérulents, au moyen du dispositif d'incorporation I.

Cette configuration diffère de la précédente en ceci que, pendant l'incorporation de ce produit dans la cuve C, les réservoirs de matières actives m1, m2, m3 sont mis hors circuit par fermeture des vannes secondaires respectives V1, V2, V3, et en ceci que la vanne générale VG est positionnée de manière à permettre le retour du liquide à la cuve C en passant par le dispositif d'incorporation I ; les buses B et la rampe R sont par ailleurs fermées.

Cette configuration permet d'incorporer au liquide qui se trouve dans la cuve C un produit phytosanitaire, en l'introduisant par le dispositif d'incorporation I.

Comme cela est connu en soi, ce dispositif d'incorporation I peut présenter sensiblement la forme d'un entonnoir surmontant un dispositif d'aspiration du type à Venturi.

Toutefois, en variante de la figure 5 d'incorporation de produits pulvérulent, au moyen de l'incorporateur I, il est également possible d'incorporer dans la cuve C (simultanément ou indépendamment) une ou plusieurs matières actives liquides (m1, m2, m3), au moyen des pompes doseuses (P1,P2,P3), pilotées par le débitmètre D1 (comme expliqué ci-dessus) qui assure le bon dosage de la cuve C. L'avantage de cette incorporation par les pompes doseuses (P1,P2,P3) est d'éviter toute manipulation manuelle des bidons de matière active, supprimant tout risque de contamination, d'erreur de dosage, de dommage lors des trajets, et d'oxydation des bidons entamés. Le pulvérisateur est ensuite utilisable de façon classique.

Une fois cette incorporation réalisée, la circulation du liquide dans l'ensemble des conduites comme indiqué à la figure 5, permet une homogénéisation très rapide et efficace à l'intérieur de la cuve C, du mélangeur à cyclone M, et de l'ensemble du circuit de circulation.

La configuration représentée à la figure 6 correspond à une phase de rinçage du circuit après pulvérisation de la matière active m1.

Dans cette phase de rinçage, la cuve C est isolée du circuit par le positionnement des vannes principale V0 et VG de manière appropriée, et la vanne secondaire de rinçage V1 est placée de manière à permettre l'aspiration de l'eau de rinçage qui se trouve à l'intérieur du bidon BR par la pompe doseuse P1.

Le fonctionnement de la pompe principale PP permet une circulation de l'eau de rinçage dans l'ensemble des conduites indiquées en trait fort sur la figure 6.

Après une telle circulation, on ouvre les buses de la rampe de pulvérisation R de manière à permettre l'évacuation de cette eau.

Bien entendu, ce qui vient d'être indiqué concernant le rinçage de la matière active m1 est applicable *mutatis mutandis* aux matières actives m2 et m3, par réglage des vannes secondaires respectives V2, V3, et mise en route des pompes doseuses respectives V2 et V3.

La configuration de la figure 7 correspond à une phase de rinçage de la cuve principale C, à la fin d'une campagne de pulvérisation.

Dans un premier temps, la vanne V0 est orientée de manière à permettre l'arrivée depuis le bidon BR jusqu'au mélangeur M via l'entrée E1, d'une quantité d'eau suffisante pour assurer le premier rinçage de la cuve C.

Puis cette vanne V0 est orientée pour permettre à la pompe PP d'aspirer dans la cuve C, via l'entrée E1 du même mélangeur M. Parallèlement, la vanne générale VG est orientée de manière à faire passer le liquide refoulé par la pompe principale PP vers les jets rotatifs de rinçage 10 situés à l'intérieur de la cuve C.

Comme on peut le comprendre à la lumière de ce qui précède, le dispositif de pulvérisation à injection directe selon l'invention permet un ajustement très rapide des dosages de matières actives à l'intérieur du liquide à pulvériser, du fait de la grande efficacité du mélangeur à cyclone M.

De part son principe de fonctionnement, un tel mélangeur permet de réaliser de manière pratiquement instantanée les différentes opérations d'homogénéisation requises.

De plus, grâce à ses petites dimensions, un tel mélangeur permet d'obtenir un circuit et un volume mort de bouillie de faible volume, ce qui augmente la réactivité du dispositif et limite les volumes morts à nettoyer *in fine.* L'ensemble de ces caractéristiques permet de s'affranchir des problèmes de surdosage ou de sous-dosage constatés dans l'état de la technique, inhérents à l'inertie des systèmes antérieurs dont le dosage DPA se faisait à l'incorporation de la matière active, proportionnellement à la variation de la vitesse d'avancement, entraînant les nombreux inconvénients inertiels expliqués ci-dessus.

De plus, le mélangeur à cyclone M est extrêmement simple et peu coûteux à réaliser, et ne nécessite aucun apport d'énergie extérieur pour fonctionner.

De surcroît, de part la simplicité de ses formes, ce mélangeur est très facile à nettoyer.

Comme on l'aura compris, l'architecture du dispositif selon l'invention permet d'éviter tout retour de matières actives m1, m2, m3 à la cuve principale C, ces matières actives atteignant la rampe de pulvérisation R en circuit fermé par l'intermédiaire du mélangeur M, pendant les phases de pulvérisation.

Ceci permet de réduire considérablement les volumes d'eau nécessaires au lavage de l'ensemble de l'installation.

On peut en particulier changer de matières actives avec des opérations de rinçage très brèves, mettant en jeu de faibles volumes d'eau.

Bien entendu, la présente invention n'est nullement limitée au mode de réalisation décrit et représenté, fourni à titre de simple exemple.

## Revendications

1. Dispositif de pulvérisation à injection directe pour engin notamment agricole, du type comprenant :
- une cuve principale (C),
- au moins une rampe de pulvérisation (R),
- un circuit reliant ladite cuve (C) à ladite rampe (R), ce circuit comprenant une pompe principale (PP) et une dérivation (d) de régulation du débit dans ladite rampe (R) en fonction de la vitesse d'avancement dudit engin,
- au moins un réservoir de matière active (m1, m2, m3), relié audit circuit par une pompe doseuse (P1, P2, P3),
ce dispositif étant **caractérisé en ce qu'**il comprend un mélangeur à cyclone (M) comprenant dans une première partie, de préférence supérieure, une pluralité d'orifices d'entrée sensiblement tangentiels (E1, E4), décalés de préférence d'un quart de tour les uns par rapport aux autres, et aptes à recevoir respectivement le liquide aspiré dans ladite cuve (C) et le liquide sous pression provenant de ladite dérivation (d), et une pluralité d'orifices d'entrée (E2) des liquides sous pression provenant desdits réservoirs de matières actives (m1, m2, m3), lesdits orifices d'entrée (E2) étant sensiblement perpendiculaires à un axe (A) du mélangeur à cyclone (M), et sensiblement en saillie intérieure, afin de pénétrer au cœur du flux entrant par l'orifice d'entrée (E1) recevant le liquide aspiré dans la cuve (C),_et dans une deuxième partie, de préférence inférieure, un orifice de sortie (S) apte à permettre l'aspiration du mélange de ces liquides par ladite pompe principale (PP).

2. Dispositif selon la revendication 1, **caractérisé en ce qu'**il comprend en outre un retour de circulation (r) de ladite rampe (R) vers ledit mélangeur (M), et **en ce que** ledit mélangeur (M) comporte en outre un orifice d'entrée (E3) apte à recevoir le liquide sous pression provenant de ce retour (r).

3. Dispositif selon l'une des revendications 1 ou 2, **caractérisé en ce qu'**il est apte à fonctionner selon au moins deux gammes de vitesses :
- une gamme relativement lente, dans laquelle on réduit le débit de matière active (m1, m2, m3) provenant dudit réservoir de matière active par rapport au débit de liquide provenant de ladite cuve principale (C), et
- une gamme relativement rapide, dans laquelle on augmente le débit de matière active (m1, m2, m3) provenant dudit réservoir de matière active par rapport au débit de liquide provenant de ladite cuve principale.

4. Dispositif selon l'une quelconque des revendications 1 à 3, **caractérisé en ce qu'**il comprend une pluralité de réservoirs de matières actives (m1, m2, m3) reliés audit circuit par des pompes doseuses respectives (P1, P2, P3).

5. Dispositif selon l'une quelconque des revendications 1 à 4, **caractérisé en ce que** la cuve (C) est associée à un débitmètre (D1) mesurant la quantité de liquide aspirée dans ladite cuve principale (C) et apte à permettre le pilotage des pompes doseuses (P1, P2, P3) en conséquence.

6. Dispositif selon l'une quelconque des revendications 1 à 5, **caractérisé en ce qu'**il comprend au moins un moyen de temporisation de la pulvérisation, activé notamment lors d'un changement de dosage des pompes doseuses de manière à assurer une propagation du nouveau dosage à tout le circuit avant pulvérisation.

7. Dispositif selon l'une quelconque des revendications précédentes, **caractérisé en ce qu'**il comprend un bidon de rinçage (BR) connecté audit circuit par une vanne principale de rinçage (V0) disposée entre ladite cuve (C) et ledit mélangeur (M).

8. Dispositif selon la revendication 7, **caractérisé en ce que** ledit bidon de rinçage (BR) est en outre relié à des vannes secondaires de rinçage (V1, V2, V3) disposées entre lesdits réservoirs de matières actives (m1, m2, m3) et lesdites pompes doseuses (P1, P2, P3).

9. Dispositif selon l'une quelconque des revendications précédentes, **caractérisé en ce qu'**il comprend en outre un système d'incorporation (I), connecté d'une part à une vanne générale (VG) disposée entre ladite pompe principale (PP) et ladite dérivation (d), et d'autre part à ladite cuve (C).

10. Dispositif selon l'une quelconque des revendications précédentes, **caractérisé en ce que** l'orifice de sortie (S) dudit mélangeur (M) est orienté de manière sensiblement tangentielle, notamment dans un sens de sortie du cyclone.

11. Dispositif selon l'une quelconque des revendications 1 à 9, **caractérisé en ce que** l'orifice de sortie (S) dudit mélangeur (M) est orienté selon une direction sensiblement coaxiale sensiblement parallèle à un axe longitudinal (A) du mélangeur.

12. Dispositif selon l'une quelconque des revendications précédentes, **caractérisé en ce que** ledit mélangeur (M) présente une forme choisie dans le groupe comprenant les cylindres, les cônes et les sphères.

13. Dispositif selon l'une quelconque des revendications précédentes, **caractérisé en ce que** ledit mélangeur comprend au moins une lèvre intérieure (11) disposée entre ses première et deuxième parties.

14. Dispositif selon l'une quelconque des revendications précédentes, **caractérisé en ce que** ledit mélangeur (M) comprend des chicanes ou volets intérieurs aptes à favoriser l'homogénéisation rapide des différents liquides entrants.

15. Engin agricole, **caractérisé en ce qu'**il est équipé d'un dispositif de pulvérisation conforme à l'une quelconque des revendications précédentes.

## Patentansprüche

1. Direkteinspritz-Sprühvorrichtung für ein, insbesondere landwirtschaftliches, Gerät, vom Typ, welche umfasst:
- ein Hauptgefäß (C),
- wenigstens ein Sprühgestänge (R),
- einen Kreislauf, welcher das Gefäß (C) mit dem Gestänge (R) verbindet, wobei der Kreislauf eine Hauptpumpe (PP) und eine Umleitung (d) zum Regulieren der Durchflussmenge in dem Gestänge (R) als Funktion der Fortbewegungsgeschwindigkeit des Geräts umfasst,
- wenigstens einen Vorratsbehälter für aktive Materialien (m1, m2, m3), welcher mit dem Kreislauf durch eine Dosierungspumpe (P1, P2, P3) verbunden ist,
wobei die Vorrichtung **dadurch gekennzeichnet ist, dass** sie eine Zyklonmischvorrichtung (M) umfasst, welche in einem ersten, vorzugsweise oberen, Teil eine Mehrzahl von im Wesentlichen tangentialen Eingangsöffnungen (E1, E4), welche vorzugsweise um eine Vierteldrehung gegeneinander versetzt sind und in der Lage sind, jeweils die in dem Gefäß (C) angesaugte Flüssigkeit sowie die unter Druck stehende, von der Umleitung (d) stammende Flüssigkeit, sowie eine Mehrzahl von Eingangsöffnungen (E2) für unter Druck stehende, von den Vorratsbehältern für aktive Materialien (m1, m2 , m3) stammende Flüssigkeiten aufzunehmen, wobei die Eingangsöffnungen (E2) im Wesentlichen senkrecht zu einer Achse (A) der Zyklonmischvorrichtung (M) und im Wesentlichen nach innen vorstehend sind, um in den Kern der Strömung einzudringen, welche durch die Eingangsöffnung (E1) eintritt, welche die in dem Gefäß (C) angesaugte Flüssigkeit aufnimmt, und in einem zweiten, vorzugsweise unteren, Teil eine Ausgangsöffnung (S) umfasst, welche in der Lage ist, das Ansaugen der Mischung dieser Flüssigkeiten durch die Hauptpumpe (PP) zu erlauben.

2. Vorrichtung nach Anspruch 1, **dadurch gekennzeichnet, dass** sie ferner eine Zirkulationsrückführung (r) des Gestänges (R) in Richtung der Mischvorrichtung (M) umfasst, und dadurch, dass die Mischvorrichtung (M) ferner eine Eingangsöffnung (E3) umfasst, welche in der Lage ist, die unter Druck stehende, von der Rückführung (r) stammende Flüssigkeit zu erhalten.

3. Vorrichtung nach einem der Ansprüche 1 oder 2, **dadurch gekennzeichnet, dass** sie in der Lage ist, gemäß wenigstens zwei Geschwindigkeitsbereichen zu arbeiten:
- einem relativ langsamen Bereich, in welchem die Durchflussmenge von aktivem Material (m1, m2, m3) reduziert wird, welches von dem Vorratsbehälter für aktives Material stammt, verglichen mit der Durchflussmenge von Flüssigkeit, welche von dem Hauptgefäß (C) stammt, und
- einem relativ schnellen Bereich, in welchem die Durchflussmenge von aktivem Material (m1, m2, m3) erhöht wird, welches von dem Vorratsbehälter für aktives Material stammt, verglichen mit der Durchflussmenge von Flüssigkeit, welche von dem Hauptgefäß stammt.

4. Vorrichtung nach einem der Ansprüche 1 bis 3, **dadurch gekennzeichnet, dass** sie eine Mehrzahl von Vorratsbehältern für aktive Materialien (m1, m2, m3) umfasst, welche mit dem Kreislauf durch jeweilige Dosierungspumpen (P1, P2, P3) verbunden sind.

5. Vorrichtung nach einem der Ansprüche 1 bis 4, **dadurch gekennzeichnet, dass** dem Gefäß ein Durchflussmessgerät (D1) zugeordnet ist, welches die Menge an Flüssigkeit misst, welche in dem Hauptgefäß (C) angesaugt wird, und in der Lage ist, als Folge davon das Regeln der Dosierungspumpen (P1, P2, P3) zu erlauben.

6. Vorrichtung nach einem der Ansprüche 1 bis 5, **dadurch gekennzeichnet, dass** sie wenigstens ein Mittel zum Verzögern des Sprühens umfasst, welches insbesondere während eines Änderns der Dosierung der Dosierungspumpen derart aktiviert wird, dass eine Weitergabe der neuen Dosierung in dem gesamten Kreislauf vor dem Sprühen sichergestellt ist.

7. Vorrichtung nach einem der vorhergehenden Ansprüche, **dadurch gekennzeichnet, dass** sie einen Spülkanister (BR) umfasst, welcher mit dem Kreislauf durch ein Haupt-Spülventil (V0) verbunden ist, welches zwischen dem Gefäß (C) und der Mischvorrichtung (M) angeordnet ist.

8. Vorrichtung nach Anspruch 7, **dadurch gekennzeichnet, dass** der Spülkanister (BR) ferner an sekundäre Spülventile (V1, V2, V3) angeschlossen ist, welche zwischen den Vorratsbehältern für aktive Materialien (m1, m2, m3) und den Dosierungspumpen (P1, P2, P3) angeordnet sind.

9. Vorrichtung nach einem der vorhergehenden Ansprüche, **dadurch gekennzeichnet, dass** sie ferner ein Beimengungssystem (I) umfasst, welches einerseits mit einem Generalventil (VG) verbunden ist, welches zwischen der Hauptpumpe (PP) und der Umleitung (d) angeordnet ist, und andererseits mit dem Gefäß (C).

10. Vorrichtung nach einem der vorhergehenden Ansprüche, **dadurch gekennzeichnet, dass** die Ausgangsöffnung (S) der Mischvorrichtung (M) in einer im Wesentlichen tangentialen Weise orientiert ist, insbesondere in einem Ausgangssinn des Zyklons.

11. Vorrichtung nach einem der Ansprüche 1 bis 9, **dadurch gekennzeichnet, dass** die Ausgangsöffnung (S) der Mischvorrichtung (M) entlang einer Richtung orientiert ist, welche im Wesentlichen koaxial im Wesentlichen parallel zu einer longitudinalen Achse (A) der Mischvorrichtung ist.

12. Vorrichtung nach einem der vorhergehenden Ansprüche, **dadurch gekennzeichnet, dass** die Mischvorrichtung (M) eine Form aufweist, welche ausgewählt ist aus der Gruppe, umfassend Zylinder, Kegel und Kugeln.

13. Vorrichtung nach einem der vorhergehenden Ansprüche, **dadurch gekennzeichnet, dass** die Mischvorrichtung wenigstens eine innere Lippe (11) umfasst, welche zwischen ihren ersten und zweiten Teilen angeordnet ist.

14. Vorrichtung nach einem der vorhergehenden Ansprüche, **dadurch gekennzeichnet, dass** die Mischvorrichtung (M) innere Ablenkbleche oder Klappen umfasst, welche in der Lage sind, die schnelle Homogenisierung der unterschiedlichen eintretenden Flüssigkeiten zu fördern.

15. Landwirtschaftliches Gerät, **dadurch gekennzeichnet, dass** es mit einer Sprühvorrichtung nach einem der vorhergehenden Ansprüche ausgerüstet ist.

## Claims

1. A direct injection spraying device for a machine, especially an agricultural machine, of the type comprising:
- a main vessel (C),
- at least one spray boom (R),
- a circuit linking said vessel (C) to said boom (R), this circuit comprising a main pump (PP) and a bypass (d) for controlling the flow rate in said boom (R) as a function of the ground speed of said machine,
- at least one tank of active material (m1, m2, m3), linked to said circuit by a dosing pump (P1, P2, P3),
this device being **characterised in that** it comprises a cyclone mixer (M) comprising in a first part, preferably an upper part, a plurality of substantially tangential inlets (E1, E4), preferably offset by a quarter turn from each other, and able to respectively receive the liquid sucked from said vessel (C) and the pressurised liquid coming from said bypass (d), and a plurality of inlets (E2) for the pressurised liquids coming from said tanks of active materials (m1, m2, m3), said inlets (E2) being substantially perpendicular to an axis (A) of the cyclone mixer (M), and substantially protruding inwards, in order to penetrate at the heart of the incoming flow by the inlet (E1) receiving the liquid sucked from the vessel (C), and in a second part, preferably a lower part, an outlet (S) able to allow the mixture of these liquids to be drawn by said main pump (PP).

2. The device according to claim 1, **characterised in that** it further comprises a circulation backflow (r) of said boom (R) towards said mixer (M), and **in that** said mixer (M) further includes an inlet (E3) able to receive the pressurised liquid coming from this backflow (r).

3. The device according to one of claims 1 and 2, **characterised in that** it is able to operate according to at least two speed ranges:
- a relatively slow range, in which the flow rate of active material (m1, m2, m3) coming from said tank of active material is decreased with respect to the flow rate of liquid coming from said main vessel (C), and
- a relatively quick range, in which the flow rate of active material (m1, m2, m3) coming from said tank of active material is increased with respect to the flow rate of liquid coming from said main vessel.

4. The device according to any of claims 1 to 3, **characterised in that** it comprises a plurality of tanks of active materials (m1, m2, m3) linked to said circuit by respective dosing pumps (P1, P2, P3).

5. The device according to any of claims 1 to 4, **characterised in that** the vessel (C) is associated with a flow meter (D1) measuring the quantity of liquid sucked from said main vessel (C) and able to allow the dosing pumps (P1, P2, P3) to be driven accordingly.

6. The device according to any of claims 1 to 5, **characterised in that** it comprises at least one spray timing means, especially activated during a dosage change of the dosing pumps so as to ensure a propagation of the new dosage to the whole circuit before spraying.

7. The device according to any of the previous claims, **characterised in that** it comprises a flushing can (BR) connected to said circuit by a main flushing valve (V0) disposed between said vessel (C) and said mixer (M).

8. The device according to claim 7, **characterised in that** said flushing can (BR) is further linked to secondary flushing valves (V1, V2, V3) disposed between said tanks of active materials (m1, m2, m3) and said dosing pumps (P1, P2, P3).

9. The device according to any of the previous claims, **characterised in that** it further comprises an incorporating system (I), connected on the one hand to a general valve (VG) disposed between said main pump (PP) and said bypass (d), and on the other hand to said vessel (C).

10. The device according to any of the previous claims, **characterised in that** the outlet (S) of said mixer (M) is oriented substantially tangentially, especially in an outlet direction of the cyclone.

11. The device according to any of claims 1 to 9, **characterised in that** the outlet (S) of said mixer (M) is oriented along a substantially coaxial direction substantially parallel to a longitudinal axis (A) of the mixer (M).

12. The device according to any of the previous claims, **characterised in that** said mixer (M) has a shape selected from the group comprising cylinders, cones and spheres.

13. The device according to any of the previous claims, **characterised in that** said mixer comprises at least one inner lip (11) disposed between the first and second parts thereof.

14. The device according to any of the previous claims, **characterised in that** said mixer (M) comprises deflectors or inner flaps able to promote a quick homogenisation of the various incoming liquids.

15. An agricultural machine **characterised in that** it is equipped with a spraying device according to any of the previous claims.
